(19) Europäisches Patentamt
European Patent Office
Office européen des brevets

(11) Publication number: **0 190 487**
**B1**

(12) **EUROPEAN PATENT SPECIFICATION**

(45) Date of publication of patent specification: **11.07.90**

(51) Int. Cl.$^5$: **C 08 G 73/10**, C 08 G 77/42, C 08 G 77/54

(21) Application number: **85308011.7**

(22) Date of filing: **04.11.85**

(54) **Soluble polyimide-siloxane precursor and process for producing it.**

(30) Priority: **02.11.84 JP 230428/84**

(43) Date of publication of application:
**13.08.86 Bulletin 86/33**

(45) Publication of the grant of the patent:
**11.07.90 Bulletin 90/28**

(84) Designated Contracting States:
**DE FR GB**

(56) References cited:
**DE-A-2 426 910**

(73) Proprietor: **Chisso Corporation**
**6-32, Nakanoshima 3-chome Kita-ku**
**Osaka-shi Osaka-fu (JP)**

(72) Inventor: **Kunimune, Kouichi**
**12-2, Ichihara**
**Ichiharashi Chibaken (JP)**
Inventor: **Kutsuzawa, Yoshiya**
**10-3, Otsutomocho Kanazawaku**
**Yokohamashi Kanagawaken (JP)**
Inventor: **Konotsune, Shiro**
**12-6, Highland 5-chome**
**Yokosukashi Kanagawaken (JP)**

(74) Representative: **Ruffles, Graham Keith et al**
**MARKS & CLERK 57-60 Lincoln's Inn Fields**
**London WC2A 3LS (GB)**

**EP 0 190 487 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a polyimide-siloxane precursor and a process for producing it.

Polyimide resins have been widely used, especially in view of their heat resistance, as protective materials, insulating materials and adhesives for electronic equipment or as films or structural materials. Generally, polyimide resins are used by applying a precursor, prior to forming a cross-linked polymer, onto an object, followed by baking to thereby complete imidization and also effect cross-linking. Various proposals have been made for improving the various functions and effects after baking. Such prior proposals, however, cannot always be said to sufficiently satisfy current diverse, individualized and sophisticated needs.

For example, polyamic acids, which have been used as polyimide precursors for electronic materials, have been applied as a solution to a substrate, followed by baking to effect imidization and curing. However, the coating solutions therefrom have a very high viscosity, making their coating workability inferior; baking may require temperatures as high as 300°—400°C, which often exceeds the heat-resistance temperature of the substrate; and the adhesion of the coating solution to substrates such as silicon wafers and glass is insufficient.

In order to improve adhesion there have been proposed copolymers of polyamic acid with silicon compounds. For example, Japanese laid-open patent applications Nos. Sho 57—143328/1982. Sho 58—7473/1983 and Sho 58—13631/1983 proposed the use of a polyimide precursor obtained by replacing a portion of a starting diamine component by a polysiloxane terminated with diamines at both ends to prepare a polyimide-siloxane copolymer. In this case, however, whilst adhesion is improved to some extent, heat resistance is reduced with the increase of the siloxane content of the copolymer and also the polymerization degree decreases to reduce the coating-formability. Japanese patent publications Nos. Sho 58—32162/1983 (corresponding to GB—A—1460047) and Sho 58—32163/1983 disclose a process wherein (i) a suitable carboxylic acid derivative, such as a tetracarboxylic acid dianhydride, is reacted with a diamine, to form a polyamidecarboxylic acid having a terminal group such as acid anhydrides; (ii) the polyamidecarboxylic acid is reacted with an aminosilicon compound at −20°C to +50°C, to obtain a silicon-containing polyamidecarboxylic acid prepolymer (precursor), which is (a) not imidized or (b) imidized (chemically cyclized) under mild conditions (low temperature, preferably 50°C or below, particularly −20°C to +25°C) in the presence of a dehydrating agent, to form an organolsilicon-modified polyimide precursor; and (iii) heating the unimidized precursor (a) or the polyimide precursor (6) in the form of solution in the presence or absence of a silane diol or a siloxane diol to effect completion of imidization and also cross-linking to thereby obtain a polyimide-siloxane precursor. However, this polyimide-siloxane precursor suffers from various disadvantages in that it requires baking at a high temperature of about 200°C or higher, up to 350°C, for its imidization as in the case of a conventional polyimide precursor composed mainly of polyamidecarboxylic acid; if the resulting cyclized substance has a high silicon content, the coating formability is inferior, while if it has a low silicon content, adhesion onto silicon wafers and glass, inferior; and, when a preimidized polyimidesiloxane precursor is prepared, cyclization by low temperature treatment in the presence of a dehydrating agent requires a long time and hence is not practical, while if cyclization is promoted by heating, the whole solution gels to lose its fluidity.

In view of the above various problems of the prior art, it has been desired to develop a precursor which is soluble in suitable solvents; has a suitable viscosity in solution form to afford good operability; can be baked and cured at a relatively low temperature and for a relatively short time and has a good coating-formability; and has superior adhesion onto silicon wafers, glass, etc., so that the resulting solution is suitable for the surface-protection of semiconductors, insulating film between multilayer interconnections, etc.

According to the invention there is provided a soluble polyimide-siloxane precursor comprising:

(a) imide-amic acid chains of the formula:

$$-R^3-(I)-[R^2-(I)]_n-R^3- \qquad (1)$$

in which the groups —(I)— are the same or are different and each is a group of the formula:

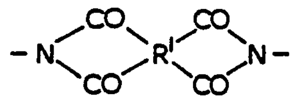 (2)

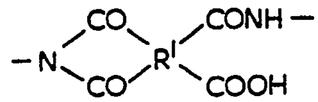 (3)

or

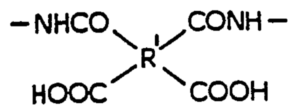 (4)

(in which $R^1$ is a tetravalent aromatic carbocyclic group); $R^2$ is a divalent $C_2$—$C_{12}$ aliphatic, $C_4$—$C_{30}$ alicyclic, $C_6$—$C_{30}$, arylaliphatic or $C_6$—$C_{30}$ carbocyclic aryl group; the groups $R^3$ are the same or are different and each is a $C_1$—$C_4$ polymethylene chain, a phenylene group or a group of the formula:

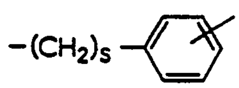 or 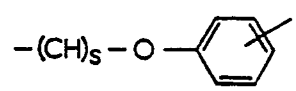

(in which *s* is 1, 2, 3 or 4); and *n* is an integer.

(b) linking groups, linking the imide-amic acid chains (a), and having the formula:

$$—Si(R^4)_{3-m}(Y^1)_{m-1}—O—Si(R^6)_{3-m}(Y^1)_{m-1}— \qquad (5)$$

in which the group(s) $R^4$ are the same or are different and each is a $C_1$—$C_6$ alkyl, phenyl or a $C_7$—$C_{12}$ alkylphenyl group; the group(s) $Y^1$ are the same or are different and each is a halogen atom, an alkoxy, acetoxy or hydroxyl group, a group $R^5R^6R^7SiO$— (in which $R^5$, $R^6$ and $R^7$ are the same or are different and each is a $C_1$—$C_6$ alkyl, phenyl or a $C_7$—$C_{12}$ alkylphenyl group), or a group $(—O—)_{1/2}$ (in which case the linking group is linked to another linking group); and m and m′ are the same or are different and each is 1, 2 or 3; and

(c) terminal groups of the formula:

$$(Y^2)_m(R^4)_{3-m}Si—$$

in which $R^4$ and *m* have the meanings defined above; and the group(s) $Y^2$ are the same or are different and each is a halogen atom, an alkoxy, acetoxy or hydroxyl group, or a group $R^5R^6R^7SiO$— (as defined above); the said polyimide-siloxane precursor

(1) having a percentage imidization, T, of from 50 to 100%, where T is defined by the formula:

$$T = \frac{(2W + P) + 100}{2W + 2P + 2Q} \qquad (8)$$

in which W is the total number of units of formula (2), P is the total number of units of formula (3), and Q is the total number of units of formula (4);

(2) satisfying the relationship

$$\frac{D^1}{B^1 + D^1} \geqslant 0.1 \qquad (9)$$

(in which $B^1$ is the total number of groups $R^2$ and $D^1$ is the total number of group $R^3$);

(3) containing at least some linking groups of formula (5) containing one or more substituents $Y^1$ in which $Y^1$ is a group $R^5R^6R^7$ SiO—; and

(4) having an inherent viscosity of from 0.05 to 5 dl/g as measured in a concentration of 0.5 g/dl in N-methyl-2-pyrrolidine at a temperature of 30 ± 0.01°C.

The invention further provides a process for the preparation of a soluble polyimide-siloxane precursor which comprises the steps of:

(1) heating together, in the presence of a solvent at a temperature of from 0 to 60°C for a period of from 0.2 to 6 hours to give a uniform reaction product, A mols of a tetracarbocylic acid anhydride of the formula:

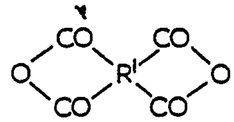 (10)

(in which $R^1$ has the meaning defined above), $B^2$ mols of a diamine of the formula:

$$H_2N—R^2—NH_2 \quad (11)$$

(in which $R^2$ has the meaning defined above), and $D^2$ mols of an aminosiloxane compound of the formula:

$$H_2N—R^3—Si(R^4)_{3-m}X^1_m \quad (12)$$

(in which $R^3$, $R^4$ and *m* have the meaning defined above and $X^1$ is a halogen atom or an alkoxy or acetoxy group); in amounts such that $B^2$ and $D^2$ satisfy the expression

$$\frac{D^2}{B^2 + D^2} \geqslant 0.1 \quad (14)$$

and A, $B^2$ and $D^2$ approximately satisfy the expression $2A = 2B^2 + D^2$; and

(2) heating the reaction product from step (1) with E mols (E being such that the value of the quotient $E/(D^2 \times m)$ is from 0.01 to 1) of a silylating agent of the formula:

$$R^5R^6R^7SiX^2 \quad (13)$$

(in which $R^5$, $R^6$ and $R^7$ have the meanings defined above and $X^2$ is a halogen atom or a hydroxy, alkoxy or acetoxy group) at a temperature of from 60 to 200°C for a period of from 0.5 to 30 hours to give a product having an inherent viscosity (measured as defined above of from 0.05 to 5 dl/g and containing groups of formulae (2), (3) and (4) (as defined above) in amounts such that the percentage imidization (as calculated from formula (8) above) is from 50 to 100%.

The soluble polyimide-siloxane precursor of the invention is an oligomer or polymer having imide-amic acid chains of formula (1) [hereinafter often simply referred to as to imide-amic acid chains (1)]; cross-linked or extended through linking by means of linking groups of formula (5) [linking groups (5)] to form a skeleton, and being terminated with groups of formula (7) [terminal groups (7)].

The groups $R^1$ preferably contains at least one six-membered ring. In particular, $R^1$ may be monocyclic aryl group, condensed polycyclic aryl group or polycyclic aryl group having a few condensed rings or noncondensed rings (these rings being linked to each other directly or through a linking group such as a group —O—, —CO—, —$SO_2$—).

Examples of groups $R^1$ are those of the formula:

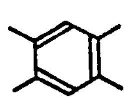 , 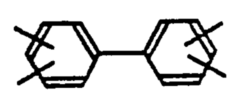 , 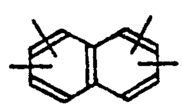

and 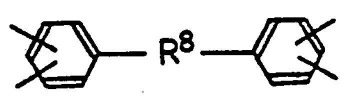

(in which $R^8$ is —O—, —CO—, —$SO_2$—). When group $R^1$ contains two or more aromatic rings (including condensed rings), the bonds on the respective rings are ortho to each other.

Examples of groups $R^2$ are phenylene groups, $C_1$—$C_4$ alkyl-phenylene groups and groups of the formulae

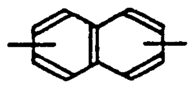 , 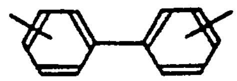 ,

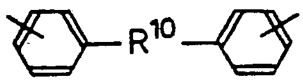 , 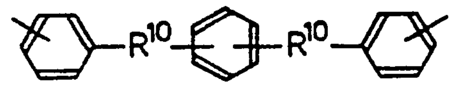

(in which $R^{10}$ is —O—, —$SO_2$—, —CO—, —$CH_2$ or —$C(CH_3)_2$—), —$(CH_2)_p$— (in which p is an integer of 2 to 12);

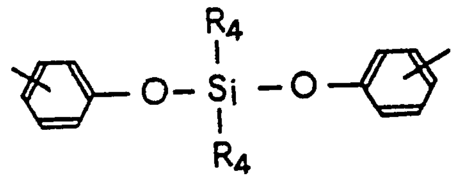 ,

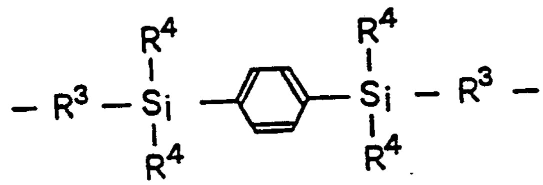 ,

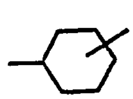 and 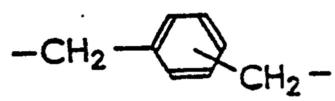

The precursor of the present invention has a suitable range of molecular weight, defined in terms of an inherent viscosity of 0.05 to 5dl/g as measured under specified conditions, and is soluble in suitable solvents.

The above interent viscosity (η inh) is expressed by the following equation:

$$\eta\ inh = \frac{\ln n/n_o}{c}$$

in which η in the value measured by a Ubbellohde viscometer in N-methyl-2-pyrrolidone as solvent in a concentration of 0.5 g/dl at a temperature of 30 ± 0.01°C; $\eta_o$ is the viscosity of the solvent measured by the Ubbellohde viscometer at the same temperature; and c is a concentration of 0.5 g/dl.

When the respective total numbers of the groups $R^2$ and $R^3$ in the imide-amic acid chain (1) are referred to as $B^1$ and $D^1$, repsectively, the quotient $D^1/(B^1 + D^1)$ is greater than or equal to 0.1 [see equation (9)]. If the total number of groups $R^3$ (i.e $D^1$) is so small that the quotient is less than 0,1, then the respective numbers of linking groups (7) each bonded to $R^3$ are small so that the total amount of Si is small and hence, for example, the adhesion lowers.

The percentage of imidization of the precursor is from 50 to 100% (determined as noted above) and hence the product has an increased percentage imidization in spite of being a precursor. Thus, for example, it is possible to effect completion of the imidization by baking at a relatively low temperature and in a relatively short time. The determination of the imide groups require to calculte the percentage imidization T may be carried out according to the known infrared absorption spectrum method.

In accordance with the invention the polyimide-siloxane precursor is produced from four starting materials, namely a tetracarboxylic acid anhydride of formula (10), a diamine of formula (11), an aminosilicone compound of formula (12) and a silylating agent of formula (13).

Examples of suitable tetracarboxylic acid dianhydrides of formula (10) are pyromellitic acid

dianhydride, 3,3',4,4'-biphenyltetracarboxylic acid anhydride, 2,2',3,3'-biphenyltetracarboxylic acid dianhydride, 2,3,3',4'-biphenyltetracarboxylic acid dianhydride, 3,3',4,4'-benzophenonetetracarboxylic acid dianhydride, 2,3,3',4'-benzophenonetetracarboxylic acid dianhydride, 2,2',3,3'-benzophenonetetracarboxylic acid dianhydride, bis(3,4-dicarboxyphenyl)-ether dianhydride, bis(3,4-dicarboxyphenyl)-sulphone dianhydride, 1,2,5,6,-naphthalenetetracarboxylic acid dianhydride, 2,3,6,7-naphthalenetetracarboxylic acid dianhydride, etc.

Examples of suitable diamines of formula (11) are aryl diamines such as 4,4'-diaminodiphenyl ether, 4,4'-diaminodiphenylmethane, 4,4'-diaminodiphenylsulphone, 4,4'-diaminodiphenylsulphide, 4,4'-diaminodiphenyl thioether, 4,4'-di(*m*-aminophenoxy)diphenylsulphone, 4,4'-di(*p*-aminophenoxy)diphenylsulphone, *o*-phenylenediamine, *m*-phenylenediamine, *p*-phenylenediamine, benzidine, 2,2'-diaminobenzophenone, 4,4'-diaminobenzophenone and 4,4'-diaminodiphenyl-2,2-propane; aliphatic diamines such as trimethylenediamine, tetramethylenediamine, hexamethylenediamine, 4,4-dimethylheptamethylenediamine and 2,11-dodecanediamine; silicic diamines such as bis(*p*-aminophenoxy)-dimethylsilane, 1,3-bis(3-aminopropyl)-1,1,3,3-tetramethyldisiloxane and 1,4-bis(3-aminopropyldimethylsilyl)benzene; alicyclic diamines such as 1,4-diaminocyclohexane; and aminoalkylsubstituted aryl compounds such as *o*-xylenediamine and *m*-xylenediamine.

Examples of suitable aminosilicon compounds of formula (12) are (3-aminopropyl)-trimethoxysilane, (3-aminopropyl)-triethoxysilane, (3-aminopropyl)-dimethoxy-methylsilane, (3-aminopropyl)-diethoxymethylsilane, (3-aminopropyl)-ethyl-dipropoxysilane, (4-aminobutyl)-trimethoxysilane, (4-aminobutyl)-triethoxysilane, (4-aminobutyl)-diethoxymethylsilane, (4-aminophenyl)-trimethoxysilane, (4-aminophenyl)-triethoxysilane, (4-aminophenyl)-dimethoxy-methylsilane, (4-aminophenyl)-diethoxymethylsilane, (3-aminophenyl)-trimethoxysilane, (3-aminophenyl)-dimethoxy-methylsilane, (4-aminobenzyl)-trimethoxysilane, and [3-(4'-aminophenyl)-propyl]-triethoxy-silane.

Examples of suitable silyating agents of formula (13) are methoxy-trimethylsilane, ethoxy-trimethylsilane, *n*-propoxy-trimethylsilane, ethyl-methoxy-dimethylsilane, ethoxy-ethyl-dimethylsilane, hydroxy-trimethylsilane, acetoxy-trimethylsilane, hydroxy-triphenylsilane, ethoxy triphenylsilane and acetoxy-triphenylsilane.

Examples of preferable solvents (reaction solvents) for use in the process of the invention are N-methylpyrrolidone, dimethylacetamide, dimethylformamide, dimethylsulphoxide, tetramethylurea, pyridine, dimethyl sulphone, hexamethylphosphonoamide, methylformamide, N-acetyl-2-pyrrolidone, toluene, xylene, methyl Cellosolve®, ethyl Cellosolve®, butyl Cellosolve®, diethylene glycol monomethyl ether and diethylene glycol dimethyl ether, etc. These solvents may be used alone or in admixture, and also may be used in the form of mixed solvents with other solvents containing 30% by weight or more of the above solvents.

In the first stage of the process of the invention A mols of tetracarboxylic acid dianhydride of formula (10) are reacted with $B^2$ mols of a diamine of formula (11) and $D^2$ mols of an aminosilicon compound of formula (12) in a reaction solvent. The values of A, $B^2$ and $D^2$ are such that they satisfy expression (14) and also approximately satisfy equation (15). Expression (14) indicates that the amount of the aminosilicon compound used is 10 mol% or more of the total of that compound and the diamine. If the quantity is less than 10 mole %, the resulting soluble polyimide-siloxane precursor, when used as surface-protecting film for semiconductors or the like, has an inferior adhesion onto silicon wafers, glass etc.

If equation (15) is perfectly satisfied, the total of amino groups in the diamine and aminosilicon compound is equivalent to the total of carboxylic anhydride groups in the tetracarboxylic acid dianhydride. It is, however, not necessary that equivalent amounts should be used. For example, if the amount of tetracarboxylic acid dianhydride is ± 10% of the theoretical number of mols thereof (A) required by equation (15), it is possible to obtain the precursor of the invention. The term "approximately satisfies the equation (15)" refers to such a range.

In the process of the invention, the reaction of the respective starting materials in a solvent is carried out in a first stage reaction wherein the tetracarboxylic dianhydride is reacted with the diamine and the aminosilicon compound at a relatively low temperature, and then in a second stage reaction wherein, after completion of the first stage reaction, the resulting reaction fluid (hereinafter often referred to as the fluid after completion of the first stage reaction) is heated in the presence of a silyating agent at a relatively high temperature. The amount of reaction solvent used is preferably 60% by weight or more based on the total weight of the solvent and starting materials added thereto, since such a quantity makes stirring or agitation easy, but 98% by weight or more is unnecessary. It is preferred to add all the reaction solvent at the beginning of the first stage reaction, since further addition of solvent is not then required.

The first stage reaction is carried out in the presence of the reaction solvent at a temperature of 0°C to 60°C, preferably 3°C to 30°C, and for a time of from 0.2 to 6 hours. The tetracarboxylic acid dianhydride, diamine and aminosilicon compound may be added at the same time to the reaction solvent. Alternatively two of these three starting materials may be first added and reaction be initiated at a low temperature, e.g. 0 to 10°C, followed by the addition of the remainder of the starting materials while stepwise or continuously raising the temperature to a temperature within the above temperature range. In this case, the addition order of the three starting materials has no particular limitation, but it is better not to add the diamine last since a higher molecular weight polymer is liable to be obtained thereby. In the first stage reaction, the above three starting materials dissolve in the solvent and reaction proceeds relatively rapidly and when a

uniform, transparent reaction fluid is formed, the reaction is almost complete, but it is preferred to continue the reaction for a while to ensure completion of the reaction. The reaction mainly comprises formation of a polyamide-carboxylic acid having the aminosilicon compounds bonded to both the ends thereof (hereinafter often referred to as intermediate F) which may be represented by the formula:

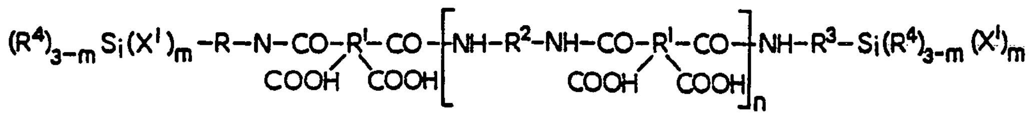

In the second stage reaction, after completion of the first stage reaction, the reaction temperature is raised in the presence of a silylating agent of formula (13) to a temperature of 60°C to 200°C, preferably 60°C to 110°C, for a time of 0.5 to 30 hours to (i) effect imidization of the polyamide-carboxylic acid, (ii) to hydrolyse groups $X^1$ at the ends of intermediate F and groups $X^2$ of the silylating compound (if such are not hydroxyl groups) with water generated by the imidization reaction and if necessary, water from other sources; and (iii) to effect siloxane condensation. The silylating agent may be added when the second stage reaction is initiated, but alternatively it may be added together with the other starting materials before initiating the first stage reaction and, in this case, there is no substantial influence upon the first stage reaction and further this mode of operation is rather preferable since transfer from the first stage to the second stage of the process is easy.

The second stage reaction comprises mainly (i) a reaction wherein the amide-carboxylic acid part of intermediate F, formed in the first stage reaction, is cyclized to imidizeate as described below, and (ii) at the same time, when $X^2$ in the aminosilicon groups at the ends of intermediate F and $X^2$ in the free silylating agent are each hydrolyzable groups (i.e. alkoxy or acetoxy groups or halogen), half or more of such hydrolyzable groups are hydrolyzed into hydroxyl groups (there will often be a case where $X^2$ is initially a hydrolysed group). As a result of the hydrolysis there occurs at least partly between the intermeidates themselves, between intermediate F and the silylating agent or between molecules of silylating agent, a condensation reaction of hydroxyl groups bonded to Si between each other or a condensation reaction of hydroxyl groups with hydrolyzable groups, to form siloxane bonds (a siloxane condensation reaction).

Siloxane bonding between molecules of the silylating agent merely leads to the formation of an inert compound which is dissolved in the solvent. The formation of other siloxane bonds, however, leads to the formation of a retricualte structure or serves to enhance the Si content in the high-molecular compound; hence in the resulting polyimide-siloxane precursor, a considerable quantity of siloxane bonds is formed not only at the sites of the groups $X^1$ and $X^2$, but also when the precursor is baked. The resulting siloxane bonds are prferred to be formed at the sites of all or nearly all the groups $X^1$ and $X^2$ , and hence it is preferred to hydrolyze one half or the whole of the groups $X^1$ and $X^2$ to form hydroxyl groups. Thus, the maximum quantity of water needed for such a hydrolysis i.e. the quantity of water consumed in hydrolyzing all the groups $X^1$ and $X^2$ is $(D^2 \times m + E)$ mols, and the quantity of water consumed in hydrolyzing one half of the groups $X^1$ and $X^2$ is $(D^2 \times m + E) \times 1/2$ mols (if $X^2$ is initially a hydroxyl group, the quantity of water will be correspondingly reduced).

At least a part of the water required for the hydrolysis is provided by the water generated when the polyamic acid is imidized. The quantity of water generated is $2A \times T\ 1/100$ mols, wherein T represents the percentage imidization. Thus, in the second stage reaction, the quantity of water to be added to the fluid after completion of the first stage reaction is $[\{(D^2xm + E) x\ 1/2 > (D^2 \times m + E)\} - 2A \times T x\ 1.100]$ mols. If the water content in the reaction solvent used is not negligible, it is necessary to take this water content into account. As described above, the quantity of water to be added in the second stage reaction varies depending on the quantity of water generated by the imidization, the water content of the reaction solvent and further the number of siloxane bonds, and there may be cases where the addition of water is unnecessary.

The silylating agent is used for molecular weight modification in order to avoid excess formation of siloxane bonds between intermediate F with the resultant formation of a high molecular weight polymer. The expression (16) governs the quantity of the silylating agent to used, i.e. the quotientin $E/(D^2 \times m)$ should be 0.01 or more. If the quotient is less than 0.01, condensation reactions proceed at both ends of the intermediates F to form, through siloxane bonds, a three-dimensional polymer having a very high molecular weight, and as a result the solution loses its fluidity and gels. It is not always necessary to add more silylating agent than is required to give on $E/(D^2 \times m)$ of more than 1.

If the reaction temperature in the second stage is below 60°C, the reaction is slow and hence such a temperature is not practical. At 60°C or higher, the reaction can be carried out without any abnormal reaction, but temperatures exceeding 200°C are unnecessary. All imidization promoter, such as a tertiary amine, may be added when carrying out the second stage reaction, but this is not always necessary since, in the process of the invention, the water generated by imidization is immediately consumed for hydrolysis to direct the reaction toward imidization and as a result the imidization reaction proceeeds rapidly. An acid catalyst or the like for promoting hydrolysis reaction may be added, but not addition is preferred taking into account the possible adverse influence of such a catalyst if it remains in the product.

In the second stage reaction, it is possible to allow the imidization reaction and the siloxane condensation reaction to proceed smoothly without gelling of the reaction fluid, by use of the silylating

agent, and it is also possible to optionally control the viscosity of the reaction fluid, i.e. the molecular weight of the precursor, by varying the quantity of silylating agent used and the reaction conditions within the above ranges, respectively. Thus it is possible to obtain a soluble polyimide-siloxane precursor in the form of oligomer or polymer, having a suitable inherent viscosity of 0.05 to 5 dl/g.

According to the process of the invention, even when a polyamide-carboxylic acid having aminosilicon groups bonded to both ends thereof (intermediate F), obtained from a tetracarboxylic acid dianhydride, a diamine and an aminosilicon compound at a low temperature in the first stage reaction, is heated in the presence of a silylating agent in the second stage reaction to effect imidization and at the same time hydrolysis and siloxane condensation reactions, the second stage reaction proceeeds smoothly without causing gelation. This is because the silylating agent participates in the reaction to effect siloxane condensation, whereby active Si sites of the intermediate F are inactivated to prevent endless siloxane condensation of the intermediates F with each other. This effect will now be described, referring to the reaction equations given below. [In this example, for simplicity of description, $H_2N—R^3Si(OEt)_3$ (wherein OEt is an ethoxy group) is used as the aminosilicon compound, the percentage imidization is made 100%, and $(CH_3)_3Si(OC_2H_5)$ is used as the silylating agent].

In a first stage of the reaction, tetracarboxylic acid dianhydride is reacted with a diamine as follows:

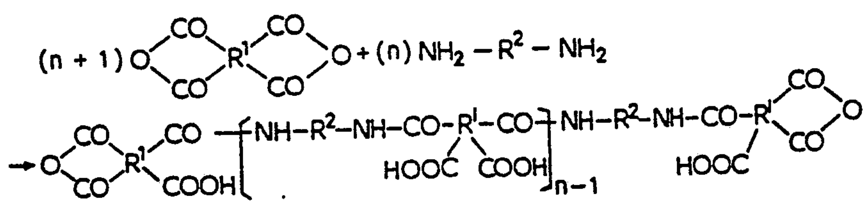

(18)

Two mols of $H_2N—R^3\text{-}Si(OEt)_3$ react with the above product to form an intermedite F of formula (19):

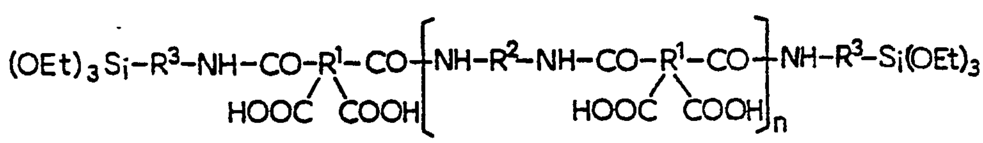

(19)

(Intermediate F)

In a second stage reaction, intermediate F is imidized by heating and at the same time water is released, as shown in equation (20):

G

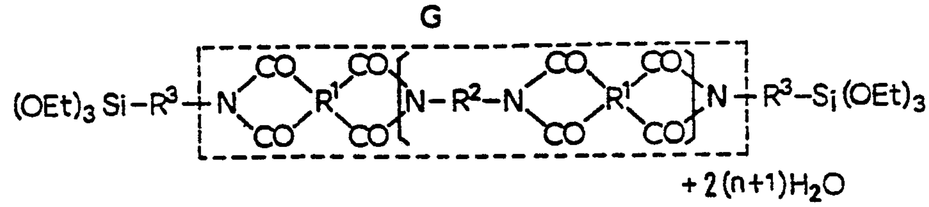

(20)

[The part enclosed by broken line in the equation (20) will hereinafter be referred to as G)].

Water present in the reaction fluid including water formed therein immediately reacts with all or a part of the $Si(OEt)_3$ groups at the ends of the new intermediate expressed by the formula (20) to form an intemediate J of the formula:

$$(OEt)_{3-y}(OH)_yS_iR^3—G—R^3—S_i(OH)_x(OEt)_{3-x} \quad (21)$$

(Intermediate J)

Groups —Si—OH in an intermediate J formed herein readily undergoes siloxane condensation reactions with —Si—OEt or —Si—Oh groups in another intermediate J, as shown in equations (22) and (23):

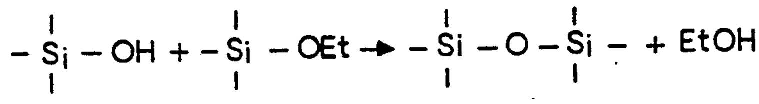

(22)

or

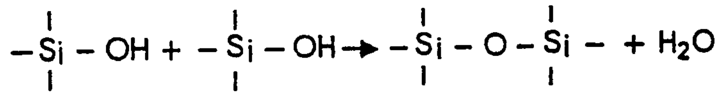

(23)

Thus, the intermediate J may be regarded as a monomer having three active sites at each end thereof (six active sites in total) in this case. Accordingly, if the intermediate J is heated in the absence of the silylating agent, no reaction occurs at a part of the active sites, while siloxane condensation reaction successively occurs at other active sites as shown in the following formula to form a crosslinked structure having a very high molecular weight:

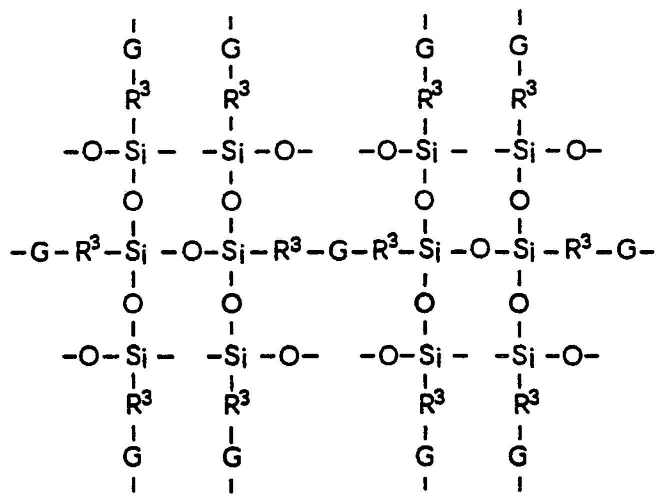

This reaction occurs rapidly so that it is impossible to control and hence the reaction fluid gels at once. Thus, as described above, according to the prior art, no imidization has been carried out, or imidization, even when carried out, has been done at a low temperature so as to minimize the quantity of water present, for example by using dehydrating agent or the like.

However, according to the process of the invention, a silylating agent is present in the second stage reaction, whereby a part of the active Si sites are inactivated, for example as shown in formula (24):

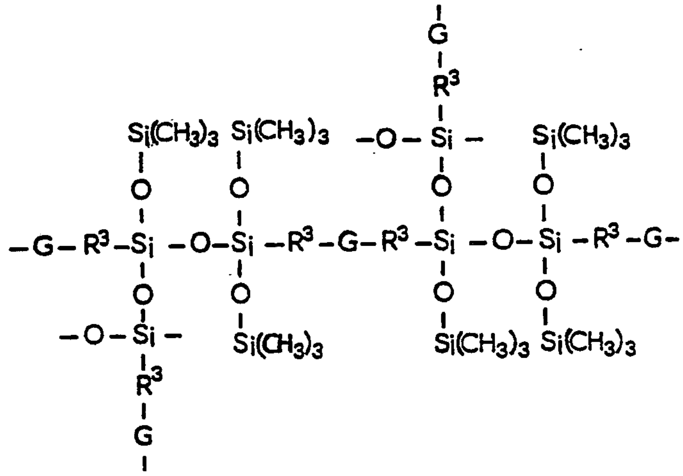

(24)

As shown in the above formula, the active sites subjected to siloxane condensation reaction with the silylating agent are inactivated so that subsequent siloxane condensation reaction is prevented. Thus, the number of crosslinks formed in restricted and also formation of polymer of very high molecualr weight is prevented so that the reaction proceeds smoothly without gelling of the reaction fluid. The resulting polyimidesiloxane precursor obtained according to the above reaction, has a percentage imidization of 50% or more and also a molecular weight as expressed by an inherent viscosity of 0.05 to 5 dl/g; it is soluble in solvents; and it has an enhanced Si content.

The polyimide-siloxane precursor of the invention (hereinafter often abbreviated to "precursor") can be widely used as a precursor to give protective materials, insulating materials, adhesives, etc. for use in electronic equipment, or films, structural materials, etc. In most cases, the precursor will be used in the form of a solution wherein in a solvent therefor, as in the case of a varnish; such a solution is preferably attained by diluting or converting the solution obtained according to the process of the invention. Suitable diluant solvents are the same as the reaction solvents.

When a precursor solution is used as a protective material for electronic materials, the solution may, if necessary, be freed from ionic substances by means of solid adsorbent or the like and further freed from minute solid impurities by means of a filter of 1 μm or less. The resulting solution may be used as a coating fluid. The concentration of such a coating fluid will depend on the thickness of coating required. It is preferably 40% by weight or less, and a range of 0.3 to 25% by weight is often particularly preferable for practical use. The coating fluid may be uniformly coated onto silicon wafers, glass, etc. by means of spinner or the like in a conventional manner, followed by baking. The baking conditions will vary somewhat depending on the solvent used, the thickness of coating, etc., but a relatively short time, e.g. about 0.5 to 1.5 hour, and a temperature of 100° to 300°C may be sufficient. By such baking, the percentage imidization of a precursor having one less than 100 reaches 100%. The precursor having a not yet so large molecular weight and which soluble in solvents is crosslinked through siloxane bonds to form a solvent-insoluble, endlessly reticulate structure, and the transparent, pale-yellow color of the precursor solution turns e.g. to a transparent, brown color (but pale-yellow to colourless in the case of a thin product several microns or less thick) to form a very hard and highly heat-resistant coating.

The precursor obtained according to the invention, when used as a liquid crystal aligning agent, exhibits good results. Namely, when a liquid crystal is applied onto a glass place and the precursor is then applied thereon, followed by rubbing, then it is possible to align the liquid crystal toward a specified direction.

The soluble polyimide-siloxane precursor of the present invention has a suitable inherent viscosity and hence its solutions have a suitable viscosity for coating. Baking of the precursor is carried out to imidize a remaining unimidized parts and also to complete siloxane condensation at unreacted active sites; hence a relatively low temperature and a relatively short time may be sufficient for baking. Further, the presence of a high Si content and hence a large quantity of siloxane bonds imparts to the precursor a good coating-formability on and a strong adhesion to silicon wafers, glass, etc. containing Si or Si compounds.

## Example 1

A 1 l flask equipped with stirrer, dropping funnel, thermometer, condenser and nitrogen gas-purging means was fixed in cold water. Into the flask purged with nitrogen gas were fed dewatered, purified N-methyl-2-pyrrolidone (500 ml), 3-aminopropyltriethoxysilane (16.236 g, 0.0733 mol), 4,4'-diaminodiphenyl ether (22.025 g, 0.110 mol) and trimethylethoxysilane (4.338 g, 0.0367 mol), which were together dissolved with stirring, followed by gradually feeding to the resulting solution, powdery pyromellitic acid dianhydride (31.990 g, 0.147 mol) through the dropping funnel over 30 minutes and continuing reaction, during which the reaction temperature was 3 to 8°C. The reaction was further continued at the temperature for 2 hours, followed by raising the temperature to effect the reaction at 25°C to 30°C for one hour. This first stage reaction formed a pale-yelow, transparent fluid having a rotational viscosity at 25°C of 23 cp. This rotational viscosity referred to herein means a viscosity measured at 25°C using an E type viscometer (VISCONIC EMD, manufactured by Tokyo Keiki Company) (this definition will be applied to the following). Next the temperature of the reaction fluid was further raised and reaction was carried out at 100°C for 9 hours (the second stage reaction) to obtain a pale-brown, transparent fluid having a rotational viscosity at 25°C of 130 cp, that is, a solution of a soluble polyimide-siloxane precursor.

A portion of this precursor solution was taken and dried at room temperature under reduced pressure to obtain a pale-brown, solid precursor having a percentage imidization of 100% as determined by its infrared absorption spectra and an inherent viscosity of 0.51. Fig. 1 shows the infrared absorpiton spectrum chart of the precursor obtained in this Example 1. It is observed from Fig. 1 that the absorption spectra of imide group (5.63 μm and 13.85 μm) are clearly present while the absorption spectrum of amidic acid (N—H band 3.08 μm) is extinct.

## Comparative Example 1

The first stage reaction of Example 1 was repeated employing the same apparatus and process except that no trimethylethoxysilane was added. thereafter the temperature was futher raised to 100°C. As a result the reaction fluid gelled in 50 minutes.

Comparative Example 2

A portion (200 ml) of the reaction fluid after completion of the first stage reaction (rotational viscosity: 23 cp), obtained in the same manner as in Example 1, was taken and reaction was carried out at 40°C for 9 hours in a nitrogen gas-purged flask same as used in Example 1, to obtain a pale-yellow, transparent varnish having a rotational viscosity at 25°C of 19 cp. This polymer had a percentage imidization of 5% or less.

Comparative Example 3

Employing the same apparatus and process as in Example 1, 4,4'-diaminodiphenyl ether (18.779 g, 0.0938 mol), 3-aminopropyltriethoxysilane (20.764 g, 0.0938 mol) and trimethylethoxysilane (5.548 g, 0.0469 mol) were dissolved in N-methyl-2-pyrrolidone (500 ml), followed by adding to the solution, pyromellitic acid dianhydride (30.685 g, 0.141 mol) over 30 minutes while keeping the reaction fluid at 5° to 10°C, reacting the mixture at this temperature for one hour and further at 40° to 45°C for one hour to obtain a uniform fluid. To this reaction fluid was fed acetic anhydride (30.627 g, 0.300 mol) and the mixture was reacted at 100°C for 5 hours to obtain a pale-brown, transparent fluid having a rotational viscosity at 25°C of 11 cp. This polymer had an inherent viscosity of 0.03 and a percentage imidization of 100%.

Comparative Example 4

Employing the same apparatus and process as in Example 1, 4,4'-diaminodiphenyl ether (31.261 g, 0.156 mol) and 3-aminopropyltriethoxysilane (3.292 g, 0.0149 mol) were dissolved in N-methyl-2-pyrrolidone (500 ml), followed by adding to the solution, pyromellitic acid dianhydride (35.676 g, 0.164 mol) over one hour while keeping the solution at 3° to 8°C, and reacting the mixture at this temperature for 2 hours and further at 40° to 45°C for one hour to obtain a pale-yellow, transparent fluid (varnish). This varnish had a rotational viscosity at 25°C of 380 cp, and this polymer had an inherent viscosity of 0.66 and a percentage imidization of 5% or less.

Example 2

Employing the same apparatus and process as in Example 1, 4,4'-diaminodiphenyl ether (41.572 g, 0.208 mol), p-aminophenyltrimethoxysilane (88.571 g, 0.415 mol) and trimethylethoxysilane (98.189 g, 0.830 mol) were dissolved in N-methyl-2-pyrrolidone (500 ml), followed by adding to the solution, pyromellitic acid dianhydide (90.573 g, 0.415 mol) over 30 minutes while keeping the solution at 3° to 8°C, and reacting the mixture at the temperature for 2 hours and further at 45° to 50°C for one hour to obtain a uniform fluid. The temperature of this reaction fluid after completion of the first stage reaction was further raised, followed by carrying out the second stage reaction at 120°C, for 5 hours and further for 3 hours under addition of water (3.744 g, 0.208 mol) to obtain a pale-brown, transparent solution of a polyimide-siloxane precursor having a rotational viscosity at 25°C of 61 cp. This precursor had an inherent viscosity of 0.063 and a percentage imidization of 100.

Example 3

Employing the same apparatus and process as in Example 1, 4,4'-diaminodiphenyl ether (16.576 g, 0.0828 mol), 3-aminopropyltriethoxysilane (12.219 g, 0.0552 mol) and trimethylmethoxysilane (2.876 g, 0.0276 mol) were dissolved in N,N-dimethylformamide (500 ml), followed by adding to the solution 3,3',4,4'-benzophenonetetracarboxylic acid dianhydride (35.568 g, 0.110 mol) over 30 minutes while keeping the solution at 5° to 10°C, and reacting the mixture at this temperature for one hour and further at 40° to 45°C for one hour to obtain a uniform fluid. The temperature of this reaction fluid after completion of the first stage reaction was raised and the second stage reaction was carried out at 90°C fo 22 hours to obtain a pale-brown, transparent solution of a polyimide-siloxane precursor having a rotational viscosity at 25°C of 97 cp. This precursor had an inherent viscosity of 0.46 and a percentage imidization of 100.

Example 4

Employing the same apparatus and process as in Example 1, 4,4'-diaminophenyl ether (26.350 g, 0.132 mol), 3-aminopropyltrimethoxysilane (9.433 g, 0.0526 mol) and trimethylacetoxysilane (3.477 g, 0.0263 mol) were dissolved in N-methyl-2-pyrrolidone (500 ml), followed by adding to the solution, pyromellitic acid dianhydride (34.445 g, 0.158 mol) over 30 minutes while keeping the solution at 5° to 10°C, and reacting the mixture at this temperature for 3 hours and further at 45° to 50°C for 30 minutes to obtain a uniform first stage fluid, further raising the temperature of the first stage reaction fluid and carrying out the second stage reaction at 100°C for 10 hours to obtain a pale-brown, transparent solution of a polyimide-siloxane precursor having a rotational viscosity at 25°C of 430 cp. This precursor had an inherent viscosity of 0.72 and a percentage imidization of 100%.

Example 5

Employing the same apparatus and process as in Example 1, m-xylylenediamine (10.603 g, 0.0780 mol), 3-aminopropyltriethoxysilane (11.507 g, 0.0520 mol) and trimethylethoxysilane (1.538 g, 0.0130 mol) were dissolved in N-methyl-2-pyrrolidone (500 ml), followed by adding to the solution pyromellitic acid dianhydride (22.673 g, 0.104 mol) over 30 minutes while keeping the solution at 5° to 10°C, reacting the

mixture at this temperature for one hour and further at 30° to 35°C for one hour to obtain a uniform first stage fluid, raising the temperature of this first stage reaction fluid and carrying out the second stage reaction at 100°C for 7 hours to obtain a pale-brown, transparent solution of a polyimide-siloxane precursor having a rotational viscosity at 25°C of 41 cp. This precursor had an inherent viscosity of 0.56 and a percentage imidization of 100.

Example 6

Employing the same apparatus as in Example 1, 4,4'-diaminodiphenyl ether (24.567 g, 0.123 mol) and p-aminophenyltrimethoxysilane (26.171 g, 0.123 mol) were dissolved in N-methyl-2-pyrrolidone (500 ml), followed by adding to the solution, pyromellitic acid dianhydride (40.144 g, 0.184 mol) over 40 minutes while keeping the solution at 5° to 10°C, and reacting the mixture at this temperature for 2 hours and further at 45° to 50°C for one hour to obtain a uniform first stage fluid, adding to the first stage reaction fluid, trimethylethoxysilane (3.638 g, 0.0308 mol), raising the temperature and carrying out the second stage reaction at 100°C for 5 hours to obtain a pale-brown, transparent solution of a polyimide-siloxane precursor having a rotational viscosity at 25°C of 110 cp. This precursor had an inherent viscosity of 0.33 and a percentage imidization of 100.

Example 7

Employing the same apparatus and process as in Example 1, 4,4'-diaminodiphenyl ether (27.889 g, 0.139 mol), 3-aminopropylmethyldiethoxysilane (7.617 g, 0.0398 mol) and trimethylethoxysilane (1.177 g, 0.00995 mol) were dissolved in N-methyl-2-pyrrolidone (500 ml), followed by adding to the solution, pyromellitic acid dianhydride (34.721 g, 0.159 mol) over 30 minutes while keeping the solution at 5° to 10°C and reacting the mixture at this temperature for 2.5 hours and further at 30° to 35°C for 2 hours to obtain a uniform first stage fluid, raising the temperature of the first stage reaction fluid and carrying out the second stage reaction at 100°C for 12 hours to obtain a pale-brown, transparent solution of a polyimide-siloxane precursor having a rotational viscosity at 25°C of 2,170 cp. This precursor had an inherent viscosity of 1.56 and a percentage imidization of 52%.

Example 8

Employing the same apparatus and process as in Example 1, 4,4'-diaminodiphenylmethane (30.575 g, 0.195 mol), 3-aminopropyltriethoxysilane (10.769 g, 0.0486 mol) and 3-aminopropyldimethylethoxysilane (7.846 g, 0.0486 mol) and trimethylethoxysilane (4,312 g, 0.0365 mol) were dissolved in N-methyl-2-pyrrolidone (500 ml), followed by adding to the solution, 3,3',4,4'-biphenyltetracarboxylic acid dianhydride (71.553 g, 0.243 mol) over 30 minutes while keeping the solution at 5° to 10°C, and reacting the mixture at this temperature for one hour, and further at 50° to 55°C for 2 hours to obtain a uniform first stage fluid, raising the temperature of the first stage reaction fluid and carrying out the second stage reaction at 100°C for 6 hours to obtain a pale-brown, transparent solution of a polyimide-siloxane precursor having a rotational viscosity at 25°C of 3,200 cp. This precursor had an inherent viscosity of 1.21 and a percentage imidization of 100%.

Example 9

Employing the same apparatus and process as in Example 1, 4,4'-diaminobenzophenone (35.350 g, 0.167 mol), 3-aminopropyltrimethoxysilane (11.938 g, 0.0666 mol) and trimethyl-n-propoxysilane (5.909 g, 0.0500 mol) were dissolved in N-methyl-2-pyrrolidone (500 ml), followed by adding to the solution, pyromellitic acid dianhydride (43.592 g, 0.200 mol) over 30 minutes while keeping the solution at 5° to 10°C, and reacting the mixture at this temperature for 2 hours, and further at 40° 45°C for one hour to obtain a uniform first stage fluid, raising the temperature of the first stage reaction fluid and carrying out the second stage reaction at 100°C for 7 hours to obtain a pale-brown, transparent solution of a polyimide-siloxane precursor having a rotational viscosity at 25°C of 680 cp. This precursor had an inherent viscosity of 0.69 and a percentage imidization of 100%.

Use Test 1

The following coating-baking test was carried out:

The solutions of polyimide-siloxane precursors obtained in the respective Examples and the final reaction fluids obtained in Comparative Examples 2—4 were each used as a coating fluid, filtered through a filter of 1 µm, coated onto a glass plate by means of a spinner and further baked at 100°C, 200°C or 300°C for one hour to observe the coating condition. The results are shown in Table 1. In addition, the respective reaction fluids after completion of the first stage reaction, obtained in these Examples, that is, solutions before imidization, are indicated as Reference examples under the same numbers as those of the corresponding Examples, and the results of coating-baking test with these reaction fluids carried out in the same manner as above are also shown therein.

TABLE 1

| Test No. | Coating fluid | Baking temperature 100°C | 200°C | 300°C |
|---|---|---|---|---|
| | Example | | | |
| 1 | 1 | ○ | ○ | ○ |
| 2 | 2 | ○ | ○ | ○ |
| 3 | 3 | ○ | ○ | ○ |
| 4 | 4 | ○ | ○ | ○ |
| 5 | 5 | ○ | ○ | ○ |
| 6 | 6 | ○ | ○ | ○ |
| 7 | 7 | ○ | ○ | ○ |
| 8 | 8 | ○ | ○ | ○ |
| 9 | 9 | ○ | ○ | ○ |
| | Comparative Example | | | |
| 10 | 2 | × | × | × |
| 11 | 3 | × | × | × |
| 12 | 4 | △ | ○ | ○ |
| | Reference Example | | | |
| 13 | 1 | × | × | × |
| 14 | 2 | × | × | × |
| 15 | 3 | × | × | × |
| 16 | 4 | △ | ○ | ○ |
| 17 | 5 | × | × | × |
| 18 | 6 | △ | ○ | ○ |
| 19 | 7 | △ | ○ | ○ |
| 20 | 8 | △ | ○ | ○ |
| 21 | 9 | △ | ○ | ○ |

Note: ○: Coating is uniformly formed and has a practically sufficient hardness.
△: Coating is uniformly formed, but is insufficient in hardness.
×: Coating is not uniformly formed.

Use test 2

The following adhesion test was carried out:

Some of the coating fluids shown in Table 2 were each coated onto the surface of a slide glass by means of a spinner, followed by baking at 100°C, 200°C or 300°C for one hour to form a coating of 1 to 2 μm thick, treating it in a thermo-hygrostat kept at 90°C and a relative humidity of 95% for 4 hours, notching the resulting coating into small square pieces of 2 mm sides, applying a Cellophane® tape onto the surface of the coating and just thereafter peeling off the tape. Adhesion of the respective coatings is expressed in

terms of the number of small square pieces peeled off together with the Cellophane® tape at that time per 100 small square pieces prior to peeling off. The results are shown in Table 2.

TABLE 2

| Test No. | Coating fluid | Baking temperature 100°C | 200°C | 300°C |
|---|---|---|---|---|
| 1 | Example 1 | 0 | 0 | 0 |
| 2 | 2 | 0 | 0 | 0 |
| 3 | 3 | 0 | 0 | 0 |
| 4 | 4 | 0 | 0 | 0 |
| 5 | 5 | 0 | 0 | 0 |
| 6 | 6 | 0 | 0 | 0 |
| 7 | 7 | 6 | 2 | 0 |
| 8 | 8 | 0 | 0 | 0 |
| 9 | 9 | 0 | 0 | 0 |
| 10 | Comparative Example 4 | 100 | 100 | 98 |

It is seen from the results of Tables 1 and 2 that the precursor of the present invention forms a coating having a sufficient strength and adhesion even when the baking carried out after coating the solution of the precursor is conducted under conditions of low temperatures (100—200°C) and short periods (about one hour).

**Claims**

1. A soluble polyimide-siloxane precursor comprising:
(a) imide-amic acid chains of the formula:

$$—R^3—(I)—[R^2—(I)]_n—R^3— \quad (1)$$

in which the groups —(I)— are the same or are different and each is a group of the formula:

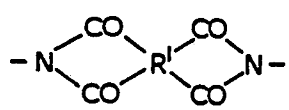
(2)

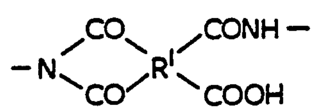
(3)

or

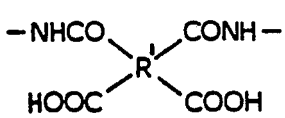
(4)

(in which $R^1$ is a tetravalent aromatic carbocyclic group); $R^2$ is a divalent $C_2$—$C_{12}$ aliphatic, $C_4$—$C_{30}$ alicyclic, $C_6$—$C_{30}$ arylaliphatic or $C_6$—$C_{30}$ carbocyclic aryl group; the groups $R^3$ are the same or are different and each is a $C_1$—$C_4$ polymethylene chain, a phenylene group or a group of the formula:

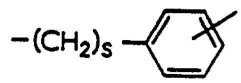 or 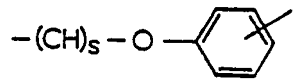

(in which *s* is 1, 2, 3, or 4); and *n* is an integer.

(b) linking groups, linking the imide-amic acid chains (a), and having the formula:

$$—Si(R^4)_{3-m}(Y^1)_{m-1}—O—Si(R^6)_{3-m}(Y^1)_{m-1}— \quad (5)$$

in which the group(s) $R^4$ are the same or are different and each is a $C_1$—$C_6$ alkyl, phenyl or a $C_7$—$C_{12}$ alkylphenyl group; the group(s) $Y^1$ are the same or are different and each is a halogen atom, an alkoxy, acetoxy or hydroxyl group, a group $R^5R^6R^7SiO$— (in which $R^5$, $R^6$ and $R^7$ are the same or are different and each is a $C_1$—$C_6$ alkyl, phenyl or a $C_7$—$C_{12}$ alkylphenyl group), or a group $(—O—)_{1/2}$ (in which case the linking group is linked to another linking group); and m and m′ are the same or are different and each is 1, 2 or 3; and

(c) terminal groups of the formula:

$$(Y^2)_m(R^4)_{3-m}Si—$$

in which $R^4$ and *m* have the meanings defined above; and the group(s) $Y^2$ are the same or are different and each is a halogen atom, an alkoxy, acetoxy or hydroxyl group, or a group $R^5R^6R^7SiO$— (as defined above); the said polyimide-siloxane precursor

(1) having a percentage imidization, T, of from 50 to 100%, where T is defined by the formula:

$$T = \frac{(2W + P) + 100}{2W + 2P + 2Q} \quad (8)$$

in which W is the total number of units of formula (2), P is the total number of units of formula (3), and Q is the total number of units of formula (4);

(2) satisfying the relationship

$$\frac{D^1}{B^1 + D^1} \geqslant 0.1 \quad (9)$$

(in which $B^1$ is the total number of groups $R^2$ and $D^1$ is the total number of group $R^3$);

(3) containing at least some linking groups of formula (5) containing one or more substituents $Y^1$ in which $Y^1$ is a group $R^5R^6R^7$ SiO—; and

(4) having an inherent viscosity of from 0.05 to 5 dl/g as measured in a concentration of 0.5 g/dl in N-methyl-2-pyrrolidine at a temperature of 30 ± 0.01°C.

2. A process for the preparation of a soluble polyimide-siloxane precursor which comprises the steps of:

(1) heating together, in the presence of a solvent at a temperature of from 0 to 60°C for a period of from 0.2 to 6 hours to give a uniform reaction product, A mols of a tetracarbocylic acid anhydride of the formula:

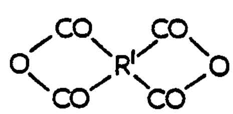 (10)

(in which $R^1$ has the meaning defined in claim 1), $B^2$ mols of a diamine of the formula:

$$H_2N—R^2—NH_2 \quad (11)$$

(in which $R^2$ has the meaning defined in claim 1), and $D^2$ mols of an aminosilxane compound of the formula:

$$H_2N—R^3—Si(R^4)_{3-m}X^1{}_m \quad (12)$$

(in which $R^3$, $R^4$ and *m* have the meanings defined in claim 1 and $X^1$ is a halogen atom or an alkoxy or acetoxy group); in amounts such that $B^2$ and $D^2$ satisfy the expression

$$\frac{D^2}{B^2 + D^2} \geq 0.1 \qquad (14)$$

and A is within ± 10% of the value whereby A, $B^2$ and $D^2$ satisfy the expression $2A = 2B^2 + D^2$; and

(2) heating the reaction product from step (1) with E mols (E being such that the value of the quotient $E/(D^2 \times m)$ is from 0.01 to 1) of a silylating agent of the formula:

$$R^5R^6R^7SiX^2 \qquad (13)$$

(in which $R^5$, $R^6$ and $R^7$ have the meanings defined in claim 1 and $X^2$ is a halogen atom or a hydroxy, alkoxy or acetoxy group) at a temperature of from 60 to 200°C for a period of from 0.5 to 30 hours to give a product having an inherent viscosity (measured as defined in claim 1) of from 0.05 to 5 dl/g and containing groups of formulae (2), (3) and (4) (as defined in claim 1) in amounts such that the percentage imidization (as calculated from formula (8) in claim 1) is from 50 to 100%.

## Patentansprüche

1. Lösliche Vorstufe für Polyimid-Siloxan enthaltend

(a) Imid-amic-Säure-Ketten der Formel:

$$-R^3-(I)-[R^2-(I)]_n-R^3- \qquad (1)$$

wobei die Gruppen —(I)— gleich oder verschieden und jeweils eine Gruppe der Formel sind:

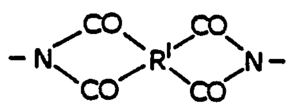

(2)

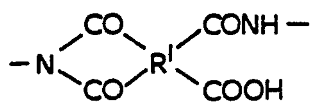

(3)

or

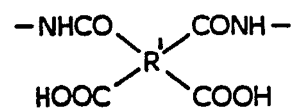

(4)

(bei denen $R^1$ eine tetravalente aromatische carbocyclische Gruppe ist); $R^2$ eine divalente $C_2$—$C_{12}$ aliphatische, $C_4$—$C_{30}$ alicyclische, $C_6$—$C_{30}$ arylaliphatische oder $C_6$—$C_{60}$ carbocyclische Arylgruppe ist; die $R^3$-Gruppen gleich oder verschieden sind und jeweils eine $C_1$—$C_4$ Polymethylenkette, eine Phenylengruppe oder eine Gruppe der Formel sind:

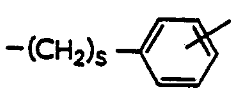 or 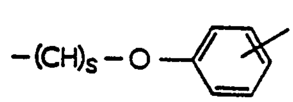

(worin s 1, 2, 3 oder 4 ist); und n ganzzahlig ist;

(b) Verbindungsgruppen, welche die Imid-amic-Säure-Ketten (a) verbinden und die Formel haben:

$$-Si(R^4)_{3-m}(Y^1)_{m-1}-O-Si(R^6)_{3-m}(Y^1)_{m-1}- \qquad (5)$$

in der die $R^4$-Gruppen gleich oder verschieden sind und jeweils eine $C_1$—$C_6$ Alkyl-, Phenyl- oder eine $C_7$—$C_{12}$ Alkylphenyl-Gruppe sind; die $Y^1$-Gruppen gleich oder verschieden sind und jeweils ein Halogenatom, eine Alkoxy-, Acetoxy- oder Hydroxylgruppe, eine $R^5R^6R^7SiO$-Gruppe (worin $R^5$, $R^6$ und $R^7$

gleich oder verschieden und jeweils eine $C_1$—$C_6$ Alkyl-, Phenyl- oder eine $C_7$—$C_{12}$ Alkylphenyl-Gruppe sind), oder eine $(—O—)_{1/2}$-Gruppe (wobei die Verbindungsgruppe mit einer anderen Verbindungsgruppe verbunden ist) sind; und m, sowie m' gleich oder verschieden und jeweils 1, 2 oder 3 sind; und

(c) Endgruppen der Formel:

$$(Y^2)_m(R^4)_{3-m}Si—$$

in der $R^4$ und m die vorher angegebenen Bedeutungen haben; und die $Y^2$-Gruppen gleich oder verschieden und jeweils ein Halogenatom, eine Alkoxy-, Acetoxy- oder Hydroxylgruppe oder eine $R^5R^6R^7$ SiO-Gruppe (mit der vorher angegebenen Bedeutung) sind; (Die Vorstufe)

(1) mit einer prozentualen Imidisation T von 50 bis 100%, wobei T bestimmt ist durch die Formel:

$$T = \frac{(2W + P) + 100}{2W + 2P + 2Q} \quad (8)$$

in der W die Gesamtzahl der Einheiten der Formel (2) ist, P die Gesamtzahl der Einheiten der Formel (3) ist und Q die Gesamtzahl der Einheiten der Formel (4);

(2) genügend der Beziehung

$$\frac{D^1}{B^1 + D^1} \geqslant 0.1 \quad (9)$$

(wobei $B^1$ die Gesamtzahl der $R^2$-Gruppen und D' die Gesamtzahl der $R^3$-Gruppen ist);

(3) enthaltend wenigstens einige Verbindungsgruppen der Formel (5), bei der eine oder mehrere Substituenten $Y^1$ vorgesehen sind, bei denen $Y^1$ eine $R^5R^6R^7$ SiO-Gruppe ist; und

(4) aufweisend eine von Natur gegebene Viskosität von 0,5 bis 5 dl/g, gemessen bei einer Konzentration von 0,5 g/dl in N-Methyl-2-Pyrrolidin bei einer Temperatur von 30 ± 0,01°C.

2. Verfahren zur Herstellung einer löslichen Vorstufe für Polyimid-Siloxan, das folgende Schritte umfaßt:

(1) Es werden in der Gegenwart eines Lösungsmittels bei einer Temperatur von 0—60°C für eine Zeitspanne von 0,2 bis 6 Stunden, um ein einheitliches Reaktionsprodukt zu erhalten, zusammen erhitzt A mol eines tetracarbocyclischen-Säureanhydrids der Formel:

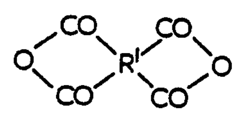

(10)

(worin $R^1$ die im Anspruch 1 angegebene Bedeutung hat), $B^2$ mol eines Diamin der Formel:

$$H_2N—R^2—NH_2 \quad (11)$$

(worin $R^2$ die im Anspruch 1 angegebene Bedeutung hat), und $D^2$ mol einer Aminosiloxan-Verbindung der Formel:

$$H_2N—R^3—Si(R^4)_{3-m}X^1{}_m \quad (12)$$

(worin $R^3$, $R^4$ und m die im Anspruch 1 angegebenen Bedeutungen haben und $X^1$ ein Halogenatom oder eine Alkoxy- oder Acetoxygruppe ist); in solchen Beträgen, daß $B^2$ und $D^2$ dem Ausdruck genügen

$$\frac{D^2}{B^2 + D^2} \geqslant 0.1 \quad (14)$$

und A innerhalb ± 10% des Wertes liegt, wobei A, $B^2$ und $D^2$ dem Ausdruck 2 A = 2 $B^2$ + $D^2$ genügen; und

(2) Es wird das Reaktionsprodukt des Schrittes (1) mit E mol (E ist so, daß der Wert des Quotienten $E/(D^2 \times m)$ von 0,01 bis 1 beträgt) eines Silylat-Wirkstoffes folgender Formel erhitzt:

$$R^5R^6R^7SiX^2 \quad (13)$$

(worin $R^5$, $R^6$ und $R^7$ die im Anspruch 1 angegebenen Bedeutungen haben und $X^2$ ein Halogenatom oder eine Hydroxy-, Alkoxy- oder Acetoxygruppe ist) und zwar bei einer Temperatur von 60—200°C, für eine Zeitspanne von 0,5 bis 30 Stunden und um ein Produkt zu erhalten, das eine von Natur gegebene (wie im

Anspruch 1 angegeben gemessene) Viskosität von 0,5 bis 5 dl/g aufweist und Gruppen gemäß der (im Anspruch 1 bestimmten) Formel (2), (3) und (4) in solchen Beträgen enthält, daß die prozentuale Imidisation (berechnet nach Formel (8) im Anspruch 1) von 50 bis 100% beträgt.

## Revendications

1. Précurseur polyimide-siloxane soluble comprenant:
a) des chaînes acide amique-imide de formule:

$$-R^3-(I)-[R^2-(I)]_n-R^3- \quad (1)$$

dans lesquelles: les groupes —(I)— sont identiques ou différents et chacun de ces groupes est un groupe de formule:

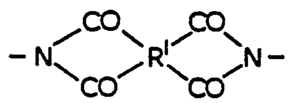

(2)

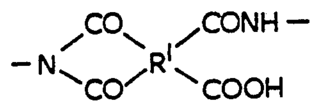

(3)

or

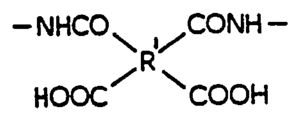

(4)

(où $R^1$ est un groupe aromatique carbocyclique tétravalent)

$R^2$ est un groupe divalent aliphatique en $C_2$—$C_{12}$, alicyclique en $C_4$—$C_{30}$, arylaliphatique en $C_6$—$C_{30}$ ou aryl carbocyclique en $C_6$—$C_{30}$; les groupes $R^3$ sont identiques ou différents et chacun d'eux représente une chaîne polyméthylène en $C_1$—$C_4$, un groupe phénylène ou un groupe de formule:

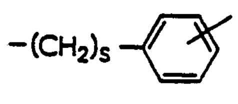 or 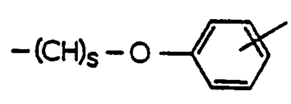

(où "s" égale 1, 2, 3 ou 4) et n est un nombre entier,

(b) des groupes de liaison reliant les chaînes acide amique-imide (a) et répondant à la formule:

$$-Si(R^4)_{3-m}(Y^1)_{m-1}-O-Si(R^6)_{3-m}(Y^1)_{m-1}- \quad (5)$$

où les groupes $R^4$ sont identiques ou différents et représentent chacun un groupe alkyle en $C_1$—$C_6$, phényle ou alkylphényle en $C_7$—$C_{12}$, les groupes $Y^1$ sont identiques ou différents et représentent chacun un atome d'halogène, un groupe alkoxy, acetoxy ou hydroxyle, un groupe $R^5R^6R^7SiO$— (où $R^5$, $R^6$, $R^7$ sont identiques ou différents et représentent chacun un groupe alkyle en $C_1$—$C_6$, phényle ou alkylphényl en $C_7$—$C_{12}$) ou bien un groupe $(-O-)_{1/2}$ (auquel cas le groupe de liaison est relié à un autre groupe de liaison) et m et m' sont égaux ou différents et représentent chacun 1, 2 ou 3 et (c) des groupes terminaux de formule:

$$(Y^2)_m(R^4)_{3-m}Si-$$

où $R^4$ et m ont les significations ci-dessus et les groupes $Y^2$ identiques ou différents représentent chacun un atome d'halogène, un groupe alkoxy, acétoxy ou hydroxyle ou un groupe $R^5R^6R^7SiO$ (tel que défini ci-dessus), ce précurseur polyimide-siloxane répondant aux caractéristiques suivantes:

(1) il présente un pourcentage d'imidisation T de 50 à 100% où T est défini par la formule:

$$T = \frac{(2W + P) + 100}{2W + 2P + 2Q} \quad (8)$$

où W est le nombre total de motifs de formule (2) P est le nombre total de motifs de formule (3) et Q est le nombre total de motifs de formule (4)

(2) il satisfait la relation

$$\frac{D^1}{B^1 + D^1} \geq 0.1 \qquad (9)$$

(où $B^1$ est le nombre total des groupes $R^2$ et $D^1$ est le nombre total des groupes $R^3$)

(3) il contient au moins certains groupes de liaisons de formule (5) renfermant un ou plusieurs substituants $Y^1$ où $Y^1$ est un groupe $R^5R^6R^7SiO—$ et

(4) il présente une viscosité inhérente de 0,05 à 5 dl/g mesurée à une concentration de 0,5 g/dl dans de la N-méthyl-2-pyrrolidine à une température de 30 ± 0,01°C.

2. Procédé de préparation d'un précurseur polyimide-siloxane soluble comprenant les séades:

(1) de chauffage, en présence d'un solvant à une température de 0 à 60°C pendant 0,2 à 6 heures pour obtenir un produit de réaction homogène, de A moles d'un anhydride d'acide tétracarbocyclique de formule:

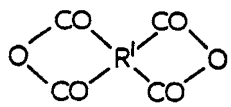

(10)

(où $R^1$ à la signification donnée à la revendication 1) de $B^2$ moles d'une diamine de formule:

$$H_2N—R^2—NH_2 \qquad (11)$$

(où $R^2$ à la signification donnée à la revendication 1) et de $D^2$ moles d'un composé aminosiloxane de formule:

$$H_2N—R^3—Si(R^4)_{3-m}X^1{}_m \qquad (12)$$

(où $R^3$, $R^4$ et m ont les significations données à la revendication 1 et $X^1$ est un atome d'halogène ou un groupe alkoxy ou acétoxy) dans des proportions telles que $B^2$ et $D^2$ satisfassent à l'expression:

$$\frac{D^2}{B^2 + D^2} \geq 0.1 \qquad (14)$$

et A est ± 10%, A, $B^2$ et $D^2$ satisfaisant l'expression:

$$2A = 2B^2 + D^2 \text{ et}$$

(2) de chauffage du produit de la réaction provenant du stade (1) ci-dessus avec E moles (E étant tel que la valeur du quotient $E/(D^2 \times m)$ soit compris entre 0,01 et 1) d'un agent de silylation de formule:

$$R^5R^6R^7SiX^2 \qquad (13)$$

(où $R^5$, $R^6$ et $R^7$ ont les significations données à la revendication 1 et $X^2$ est un atome d'halogène ou un groupe hydroxy, alkoxy ou acétoxy) à une température de 60 à 200°C pendant 0,5 à 30 heures pour obtenir un produit ayant une viscosité inhérente (mesurée de la façon indiquée à la revendication 1) de 0,05 à 5 dl/g et renfermant des groupes de formules (2), (3) et (4) (telles que définies à la revendication 1) dans des proportions telles que le pourcentage d'imidisation (tel que calculés à partir de la formule (8) de la revendication 1) soit de 50 à 100%.

FIG.1

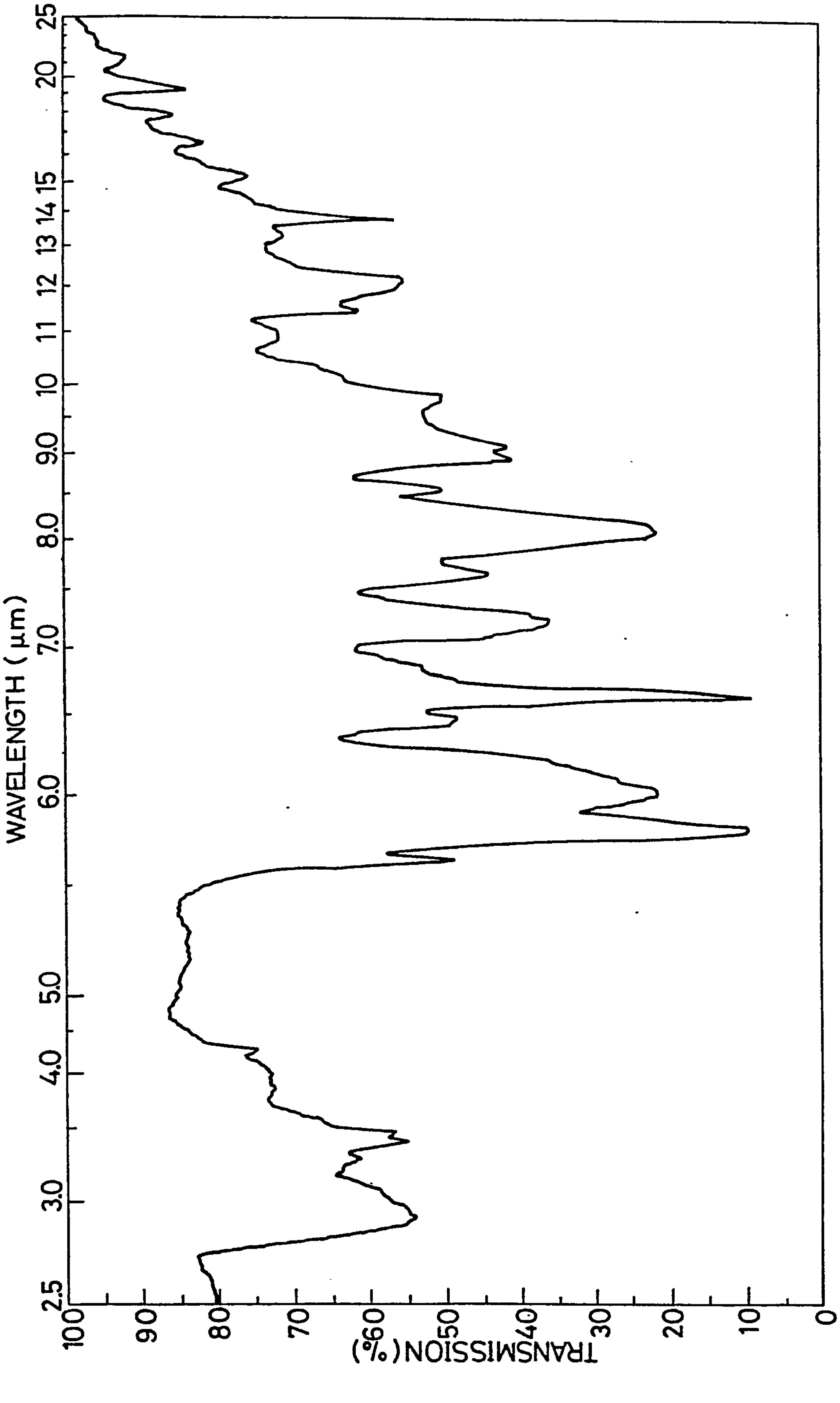
WAVELENGTH ( μm )
2.5
3.0
4.0
5.0
6.0
7.0
8.0
9.0
10
11
12
13
14
15
20
25
TRANSMISSION (%)
100
90
80
70
60
50
40
30
20
10
0